# EUROPÄISCHE PATENTSCHRIFT

(11) **EP 3 420 257 B1**
(45) Veröffentlichungstag und Bekanntmachung des Hinweises auf die Patenterteilung: **11.03.2020**
(21) Anmeldenummer: 17700105.4
(22) Anmeldetag: 03.01.2017
(51) Int. Cl.: F16K 31/06, F02M 63/00

(54) **MAGNETVENTIL**
SOLENOID VALVE
ÉLECTROVANNE

(30) Priorität: 26.02.2016 DE 102016203083
(43) Veröffentlichungstag der Anmeldung: 02.01.2019
(73) Patentinhaber: Robert Bosch GmbH, 70442 Stuttgart (DE)
(72) Erfinder: LANGENBACH, Christian, 71576 Erbstetten (DE); LUCARELLI, Francesco, 70469 Stuttgart (DE); KOLB, Stefan, 71116 Gaertringen (DE); LANDENBERGER, Tobias, 73614 Schorndorf (DE); RAPP, Holger, 71254 Ditzingen (DE); REPPHUN, Gernot, 72336 Balingen (DE); GRIEB, Markus, 70839 Gerlingen (DE); HOLM, Steffen, 70469 Stuttgart-Feuerbach (DE); DUTT, Andreas, 70469 Stuttgart (DE)
(86) Internationale Anmeldenummer: PCT/EP2017/050068
(87) Internationale Veröffentlichungsnummer: WO 2017/144186

(56) Entgegenhaltungen:
- DE-A1- 3 810 826
- US-A- 4 423 843
- US-A1- 2005 189 512
- US-A1- 2014 346 382
- US-B1- 6 302 371

## Beschreibung

Die vorliegende Erfindung betrifft ein Magnetventil, aufweisend einen Ventilkörper, in dem eine mit einem Magnetkern zusammenwirkende Magnetspule angeordnet ist, und mit einem relativ zu dem Magnetkern zwischen zwei Endstellungen bewegbaren Anker zusammenwirkt, der in einer von dem Magnetkern wegweisenden Bewegungsrichtung von der Federkraft einer Ankerfeder beaufschlagt ist, und wobei der Magnetkern und der Anker von einer die Ankerfeder aufnehmenden Ausnehmung durchbrochene Anschlagflächen aufweisen.

### Stand der Technik

Ein derartiges Magnetventil ist aus der DE 10 2013 218 953 A1 bekannt. Dieses Magnetventil ist als elektromagnetisches Saugventil einer Kraftstoffhochdruckpumpe ausgebildet, wobei mit dem elektromagnetisch betätigten Saugventil die einem Pumpenarbeitsraum der Kraftstoffhochdruckpumpe zugemessene Kraftstoffmenge eingestellt wird. Dazu weist das Magnetventil in bekannter Ausgestaltung einen Aktorkörper auf, in dem eine mit einem Magnetkern zusammenwirkende Magnetspule angeordnet ist, die mit einem relativ zu dem Magnetkern zwischen zwei Endstellungen bewegbaren Anker zusammenwirkt. Der Anker wird dabei von einer Ankerfeder beaufschlagt, die den Anker von dem Magnetkern wegdrückt. Die Ankerfeder ist in einer Ausnehmung angeordnet, die in den Magnetkern und den Anker eingelassen ist. Der Magnetkern und der Anker weisen die Ausnehmung umfassende Anschlagflächen auf, die in einer Endstellung des Ankers in Bezug zu dem Magnetkern zusammenwirken.

US 6 302 371 B1 offenbart ein Magnetventil, aufweisend einen Aktorkörper, in dem eine mit einem Magnetkern zusammenwirkende Magnetspule angeordnet ist, und mit einem relativ zu dem Magnetkern zwischen zwei Endstellungen bewegbaren Anker zusammenwirkt, der in einer von dem Magnetkern wegweisenden Bewegungsrichtung von der Federkraft einer Ankerfeder beaufschlagt ist, und wobei der Magnetkern und der Anker von einer die Ankerfeder aufnehmende Ausnehmung durchbrochene Anschlagflächen aufweisen, wobei der Magnetkern und/oder der Anker eine eine Kantenbelastung im Bereich der Anschlagflächen vermindernde gerundete Ausgestaltung aufweist.

US 4 423 843 A zeigt einen elektromagnetischen Injektor.

US 2014/346382 A1 zeigt ein elektromagnetisches Ventil, aufweisend einen Magnetkern und einen Anker, wobei diese eine gewölbte Ausgestaltung aufweisen.

DE 38 10 826 A1 offenbart ein elektromagnetisches Einspritzventil mit einem Ventilschließkörper, der kugelkalottenförmig ausgeführt ist.

US 2005/189512 A1 zeigt ein elektromagnetisches Ventil mit einem Magnetkern und einem Anker, wobei der Magnetkern an der Wirkfläche zum Anker eine flache Oberfläche aufweist und der Anker eine konvex geformte Oberfläche aufweist. Eine offenbarte Ausführung zeigt eine torusförmige Ausgestaltung des Ankers.

Der Erfindung liegt die Aufgabe zugrunde, ein Magnetventil bereitzustellen, das hinsichtlich seiner Funktion und einer verschleißverursachenden Belastung verbessert ist.

### Offenbarung der Erfindung

Diese Aufgabe wird dadurch gelöst, dass der Magnetkern eine Kantenbelastung im Bereich der Anschlagflächen vermindernde gerundete Ausgestaltung aufweist. Dieser Ausgestaltung liegt die Erkenntnis zugrunde, dass ein solches Magnetventil hinsichtlich unterschiedlicher Parameter Verbesserungspotential aufweist. Einerseits ist es so, dass sich beim Anlegen einer Spannung an die Magnetspule eine Magnetkraft aufbaut, die den Anker entgegen der Federkraft der Ankerfeder bis zur Anlage an den Magnetkern anzieht. Wird nun die Bestromung aufgehoben, soll sich der Anker möglichst schnell von dem Magnetkern lösen und eine gewünschte Schaltfunktion ausführen. Dieses schnelle Lösen wird bei einem fluidgefüllten Magnetventil durch einen Klebeeffekt (hydraulisches Kleben) des Ankers an dem Magnetkern erschwert. Andererseits ist es so, dass der Anker im Ruhezustand, in dem er von der Ankerfeder von dem Magnetkern wegbewegt ist, eine geringe Schiefstellung zu dem Magnetkern aufweisen kann. Diese Schiefstellung verursacht unter Umständen bei einem nachfolgenden Schaltvorgang, der durch eine Bestromung der Magnetspule eingestellt wird, dass der Anker in einer Schiefstellung auf den Magnetkern auftritt und dadurch eine Kantenbelastung im Bereich der zunächst aneinander gelangenden Anschlagflächen des Ankers und des Magnetkerns auftritt, die einen Verschleiß in diesem Bereich verursachen kann. Durch die gerundete Ausgestaltung der Anschlagflächen wird nun sowohl die Kantenbelastung vermieden als auch bei einem anschließenden Lösevorgang des Ankers von dem Magnetkern durch Aufhebung der Bestromung der Magnetspule ein hydraulischer Klebeeffekt des Ankers an dem Magnetkern vermieden. Somit wird durch die erfindungsgemäße Ausgestaltung die Schaltgenauigkeit des Magnetventils erhöht, während gleichzeitig ein möglicher Verschleiß deutlich reduziert beziehungsweise ausgeschlossen werden kann.

In Weiterbildung der Erfindung weist (weisen) der Magnetkern und/oder der Anker im Bereich zumindest einer Anschlagfläche eine ballige Ausgestaltung auf. Die ballige Ausgestaltung erstreckt sich über die gesamte Anschlagfläche des Magnetkerns und/oder des Ankers und wird nur durch die Ausnehmung unterbrochen.

Erfindungsgemäß weist der Magnetkern im Bereich zumindest einer Anschlagfläche eine torusförmige Ausgestaltung auf. Diese Ausführungsform stellten sicher, dass keine Kantenbelastung auftritt und gleichzeitig auch Klebeeffekte vermieden werden.

In weiterer Ausgestaltung der Erfindung weisen die Anschlagflächen des Magnetkerns und des Ankers eine Ausgestaltungskombination konvex/konvex auf. Alternativ ist es in einer anderen Ausgestaltung auch vorgesehen, dass die Anschlagflächen des Ankers und Magnetkerns eine Ausgestaltungskombination konvex/konkav beziehungsweise konkav/konvex aufweisen. Dabei ist bei der zweitgenannten Ausgestaltungskombination in jedem Fall die Kantenbelastung reduziert beziehungsweise aufgehoben, wobei darüber hinaus durch eine entsprechende Kombination der konvexen beziehungsweise konkaven Ausgestaltung der Anschlagflächen auch kein hydraulischer Klebeeffekt auftritt, indem das Maß der Konvexität und der Konkavität unterschiedlich gewählt werden. In diesem Zusammenhang ist ausdrücklich darauf hinzuweisen, dass die gerundete Ausgestaltung einer Anschlagfläche (also entweder des Magnetkerns oder des Ankers) auch die Möglichkeit einschließt, dass die zweite Anschlagfläche eben ausgestaltet ist. Diese Möglichkeit ist bei allen zuvor dargestellten Ausführungsformen vorgesehen.

In Weiterbildung der Erfindung weist die gerundete Ausgestaltung der Anschlagflächen ein Maß B auf, dass bei einer maximalen Schiefstellung des Ankers zu dem Magnetkern keine Kantenbelastung auftritt. Dadurch ist die Funktion des Magnetventils hinsichtlich der auftretenden Kräfte und Belastungen des Magnetventils optimiert.

In Weiterbildung der Erfindung weist die gerundete Ausgestaltung ein Rundungsmaß im Bereich von 30 µm bis 500 µm, bevorzugt im Bereich von 50 µm bis 300 µm, auf. Innerhalb dieser genannten Werte ist normalerweise sichergestellt, dass die geschilderten Probleme nicht auftreten können. Diese Werte eignen sich insbesondere für ein Magnetventil, das bei einer nachfolgend genannten Kraftstoffhochdruckpumpe eingesetzt wird. Insbesondere bei anderen Anwendungen sind auch andere Rundungsmaße im Rahmen der Erfindung möglich.

In weiterer Ausgestaltung der Erfindung sind die Anschlagflächen gehärtet. Da sowohl der Magnetkern als auch der Anker unter anderem zur Erzeugung und Weiterleitung der magnetischen Felder aus einem metallischen Werkstoff gefertigt sind, ist eine Härtung problemlos möglich.
In Weiterbildung der Erfindung ist eine Kraftstoffhochdruckpumpe mit einem als elektromagnetisches Saugventil ausgebildeten Magnetventil nach einem der vorherigen Ansprüche versehen. Dies ist die bevorzugte Anwendung, wobei im Rahmen der Erfindung aber auch andere Anwendungen möglich sind. Das erfindungsgemäß ausgestaltete elektromagnetische Saugventil der Kraftstoffhochdruckpumpe insbesondere eines Common-Rail-Einspritzsystems gewährleistet einen störungsfreien Betrieb über einen Zeitraum, der die Lebensdauer der Kraftstoffhochdruckpumpe bei einem normalen Betrieb umfasst.
Weitere vorteilhafte Ausgestaltungen der Erfindung sind der Zeichnungsbeschreibung zu entnehmen, in der in den Figuren dargestellte Ausführungsbeispiele näher beschrieben sind.

Es zeigen:
- Figur 1: einen Längsschnitt durch einen Pumpenzylinderkopfbereich einer Kraftstoffhochdruckpumpe, die mit einem als elektromagnetisches Saugventil ausgebildeten Magnetventil, das nicht Teil der vorliegenden Erfindung ist, ausgestaltet ist,
- Figur 2: eine Detailansicht der Anschlagflächen eines Magnetkerns und eines Ankers eines Magnetventils, das nicht Teil der vorliegenden Erfindung ist, mit einer balligen Ausgestaltung,
- Figur 3: eine Detailansicht der Anschlagflächen eines Magnetkerns und eines Ankers eines Magnetventils, das nicht Teil der vorliegenden Erfindung ist, wobei der Anker eine torusförmige Ausgestaltung aufweist,
- Figur 4: eine Detailansicht der Anschlagflächen eines Magnetkerns und eines Ankers eines erfindungsgemäßen Magnetventils, wobei beide Kontaktflächen eine torusförmige Ausgestaltung aufweisen und
- Figur 5: eine Detailansicht der Kontaktflächen eines Magnetkerns und eines Ankers eines erfindungsgemäßen Magnetventils, wobei der Magnetkern eine torusförmige konvexe Ausgestaltung und der Anker eine torusförmige konkave Ausgestaltung aufweist.

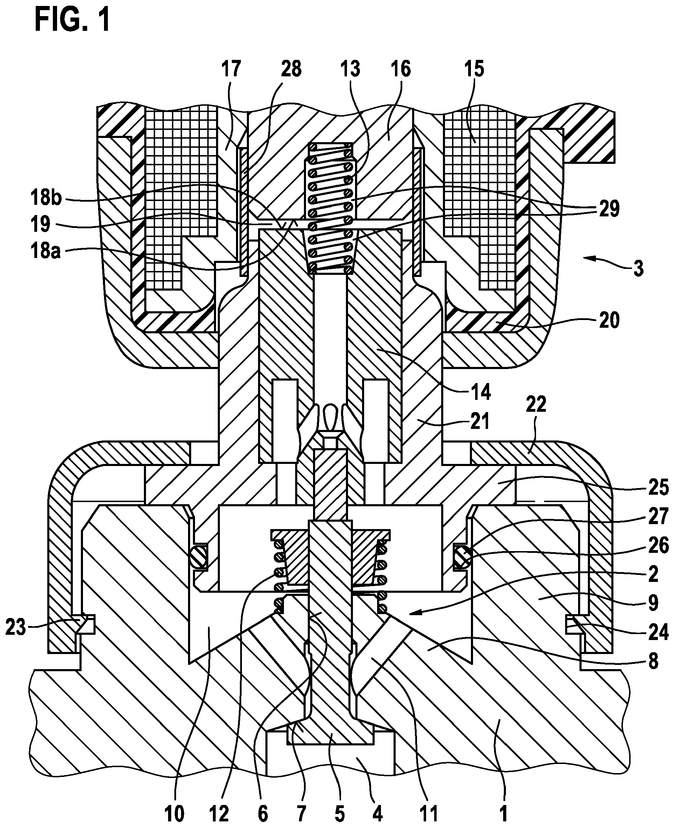

Die in der Figur 1 teilweise im Längsschnitt dargestellte Kraftstoffhochdruckpumpe umfasst einen Pumpenzylinderkopf 1, in den ein Magnetventil integriert ist. Das Magnetventil umfasst ein elektromagnetisch ansteuerbares Saugventil 2, das von einem Magnetaktor 3 betätigt wird. Das Saugventil 2 dient der Befüllung eines Pumpenarbeitsraums 4 der Kraftstoffhochdruckpumpe mit Kraftstoff. Das Saugventil 2 umfasst einen Ventilstößel 5, der in einer Bohrung 6 des Pumpenzylinderkopfs 1 hubbeweglich aufgenommen und geführt ist. Der Pumpenzylinderkopf 1 bildet ferner einen Ventilsitz 7 aus, der mit einem Ventilteller des Ventilstößels 5 dichtend zusammenwirkt.
Im Bereich der Bohrung 6 weist der Pumpenzylinderkopf 1 der Kraftstoffhochdruckpumpe eine kegelförmige Erhöhung 8 auf, die von einem Kragen 9 umgeben ist. Der Kragen 9 ist Bestandteil des Pumpenzylinderkopfs 1 und begrenzt einen Niederdruckraum 10, der über Zulaufbohrungen 11 mit der Bohrung 6 verbunden ist. Somit ist der Niederdruckraum 10 Teil eines Strömungspfades des Kraftstoffs.
Der Ventilstößel 5 mit dem Ventilteller des Saugventils 2 öffnet unmittelbar in den Pumpenarbeitsraum 4. In Schließrichtung ist der Ventilstößel 5 von der Federkraft einer Ventilfeder 12 beaufschlagt, die einerseits am Ventilstößel 5 beziehungsweise einem damit zusammenwirkenden Halteteil und andererseits an dem Pumpenzylinderkopf 1 im Bereich der Erhöhung 8 abgestützt ist. Die Federkraft der Ventilfeder 12 ist kleiner als die Federkraft einer Ankerfeder 13 gewählt, die einen mit dem Ventilstößel 5 koppelbaren Anker 14 des Magnetaktors 3 kraftbeaufschlagt und sich dazu an einem Magnetkern 16 abstützt. Dabei ist die Ankerfeder 13 in eine Ausnehmung 29 eingesetzt, die in den Magnetkern 16 und den Anker 14 eingelassen ist. Die Federkraft der Ankerfeder 13 ist der Federkraft der Ventilfeder 12 entgegengesetzt, so dass die Ventilfeder 12 das Saugventil 2 nicht schließen kann, wenn die Ankerfeder 13 den Anker 14 gegen den Ventilstößel 5 drückt.

Um die Federkraft der Ankerfeder 13 zu überwinden und das Saugventil 2 zu schließen, ist der Magnetaktor 3 vorgesehen, der eine ringförmige Magnetspule 15 sowie den hierin eingesetzten Magnetkern 16 umfasst. Der Magnetkern 16 und die Magnetspule 15 sind in einen Aktorkörper 17 eingebaut. Der Magnetkern 16 und der Anker 14 weisen zueinander ausgerichtete die Ausnehmung 29 umgebende Anschlagflächen 18a, 18b auf, die einen Arbeitsluftspalt 19 einschließen. Die erfindungsgemäßen Ausgestaltungen der Anschlagflächen 18a, 18b werden in den nachfolgenden Figuren detailliert erläutert.

Wird die Magnetspule 15 bestromt, bewegt sich der Anker 14 in Richtung des Magnetkerns 16, um den Arbeitsluftspalt 19 zu schließen, wobei die Anschlagflächen 18a, 18b des Magnetkerns 16 und des Ankers 14 miteinander in Kontakt kommen. Die Bewegung des Ankers 14 bewirkt eine Entlastung des Ventilstößels 5, so dass die Ventilfeder 12 den Ventilstößel 5 in den Ventilsitz 7 drückt. Das Saugventil 2 schließt. Zum Öffnen des Saugventils 2 wird die Bestromung der Magnetspule 15 aufgehoben und die Federkraft der Ankerfeder 13 stellt den Anker 14 und den Ventilstößel 5 in jeweils die geöffnete Ausgangslage des Saugventils 2 zurück.

Der Magnetaktor 3, der zur elektrischen Isolation und zur Abdichtung gegenüber der Umgebung von einer Umspritzung 20 umgeben ist, ist in dem Aktorkörper 17 und dieser über eine Führungshülse 21 an dem Pumpenzylinderkopf 1 der Kraftstoffhochdruckpumpe fixiert. Diese Fixierung wird über eine Kappe 22 vorgenommen, die auf die mit dem Magnetaktor 3 verbundene Führungshülse 21 aufgesteckt und mit dem Kragen 9 des Pumpenzylinderkopfs 1 formschlüssig verbunden ist. Die Kappe 22 besitzt hierzu eine umlaufende Rastnase 23, die nach radial innen weist und in eine außenumfangsseitig angeordnete Ringnut 24 des Kragens 9 eingreift. Die Führungshülse 21, auf welche die Kappe 22 aufgesteckt ist, besitzt zur Abstützung der Kappe 22 einen außenumfangsseitig angeordneten umlaufenden Bund 25, über welchen ferner die Führungshülse 21 am Kragen 9 abgestützt ist. Der Bund 25 ist zurückgesetzt angeordnet, so dass ein Abschnitt der Führungshülse 21 in den Kragen 9 hinein ragt. Dieser Abschnitt weist außenumfangsseitig eine Ringnut 26 auf, in welcher ein Dichtelement 27 eingesetzt ist. Das Dichtelement 27 liegt unter Vorspannung an der Innenumfangsseite des Kragens 9 an, so dass hierüber eine Abdichtung des Niederdruckraums 10 bewirkt wird.

Die Führungshülse 21 dient der Aufnahme und Führung des Ankers 14. Sie ist über eine Hülse 28 mit dem Magnetkern 16 des Magnetaktors 3 verbunden. Die Hülse 28 ist hierzu einerseits auf die Führungshülse 21, andererseits auf den Magnetkern 16 aufgesteckt und mit diesem beispielsweise verschweißt. Zur magnetischen Trennung der Führungshülse 21 von dem Magnetkern 16 ist die Hülse 28 aus einem amagnetischen Material gefertigt. Der Verbindungsbereich liegt innerhalb der Umspritzung 20.

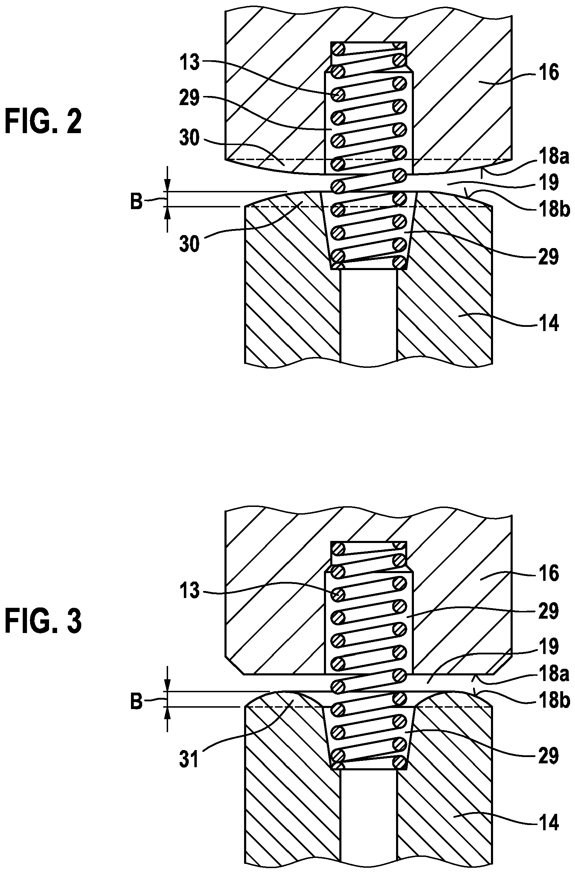

Figur 2 zeigt eine Detailansicht der einander zugewandten Anschlagflächen 18a, 18b des Magnetkerns 16 und des Ankers 14. In den Magnetkern 16 und den Anker 14 ist die ineinander übergehende Ausnehmung 29 eingelassen, die die Ankerfeder 13 aufnimmt. Ausgehend von der in Figur 1 dargestellten planen Ausgestaltung der Anschlagflächen 18a, 18b zeigt Figur 2 eine ballige Ausgestaltung 30 sowohl des Magnetkerns 16 als auch des Ankers 14. Das Maß B der balligen Ausgestaltung 30 ist dabei vorzugsweise so bemessen, dass bei einer möglichen Schiefstellung des Ankers 14 in Bezug zu dem Magnetkern 16 im Außenumfangsbereich der genannten Bauteile keine Kantenbelastung an den Anschlagflächen 18a, 18b auftritt.

Im Unterschied dazu ist bei der Ausführungsform gemäß der Figur 3 die Anschlagfläche 18a des Magnetkerns 16 plan ausgebildet, während die Anschlagfläche 18b des Ankers 14 eine torusförmige Ausgestaltung 31 aufweist. Dabei liegt das Maß B der balligen Ausgestaltung 30 beziehungsweise der torusförmigen Ausgestaltung 31 vorzugsweise im Bereich von circa 50 µm bis circa 300 µm.

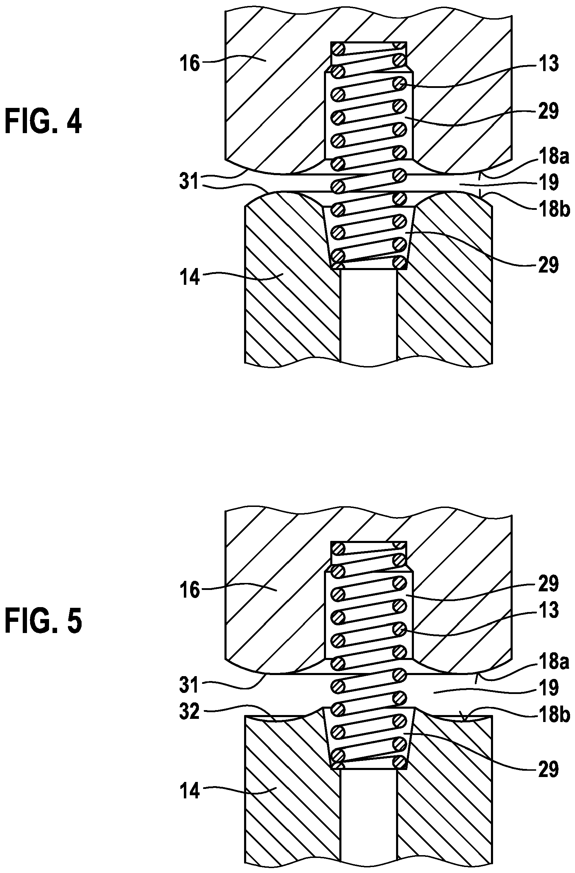

Figur 4 zeigt im Unterschied zur Ausführungsform der Figur 3 eine erfindungsgemäße torusförmige Ausgestaltung 31 des Magnetkerns 16 und eine torusförmige Ausgestaltung 31 des Ankers 14. Folglich weisen hier die Anschlagflächen 18a, 18b des Ankers 14 und des Magnetkerns 16 eine Kombination konvex/konvex auf.

Bei der Ausführung gemäß Figur 5 weist der Magnetkern 16 wieder eine erfindungsgemäße torusförmige Ausgestaltung 31 der Anschlagfläche 18a auf, während die Anschlagfläche 18b des Ankers 14 eine auf die torusförmige Ausgestaltung 31 abgestimmte konkave Ausgestaltung 32 aufweist. Das Maß der Konvexität beziehungsweise Konkavität kann gleich oder unterschiedlich sein. Insbesondere kann das Maß der Konvexität kleiner als das Maß der Konkavität sein, so dass sichergestellt ist, dass auch unter ungünstigen Bedingungen hinsichtlich einer Schiefstellung des Ankers 14 gegenüber dem Magnetkern 16 keine Kantenbelastung auftritt.

## Patentansprüche

1. Magnetventil, aufweisend einen Aktorkörper (17), in dem eine mit einem Magnetkern (16) zusammenwirkende Magnetspule (15) angeordnet ist, und mit einem relativ zu dem Magnetkern (16) zwischen zwei Endstellungen bewegbaren Anker (14) zusammenwirkt, der in einer von dem Magnetkern (16) wegweisenden Bewegungsrichtung von der Federkraft einer Ankerfeder (13) beaufschlagt ist, und wobei der Magnetkern (16) und der Anker (14) von einer die Ankerfeder (13) aufnehmenden Ausnehmung (29) durchbrochene Anschlagflächen (18a, 18b) aufweisen, wobei
der Magnetkern (16) eine eine Kantenbelastung im Bereich der Anschlagflächen (18a, 18b) vermindernde gerundete Ausgestaltung (31) aufweist,
**dadurch gekennzeichnet, dass** die gerundete Ausgestaltung (31) des Magnetkerns im Bereich zumindest seiner Anschlagfläche (18a) eine torusförmige Ausgestaltung (31) ist.

2. Magnetventil nach Anspruch 1,
**dadurch gekennzeichnet, dass** die Anschlagflächen (18a, 18b) des Magnetkerns (16) und des Ankers (14) eine Ausgestaltungskombination konvex/konvex aufweisen.

3. Magnetventil nach Anspruch 1,
**dadurch gekennzeichnet, dass** die Anschlagflächen (18a, 18b) des Magnetkerns (16) und des Ankers (14) eine Ausgestaltungskombination konvex/konkav aufweisen.

4. Magnetventil nach einem der vorherigen Ansprüche,
**dadurch gekennzeichnet, dass** die Anschlagflächen (18a, 18b) gehärtet sind.

5. Kraftstoffhochdruckpumpe mit einem Magnetventil nach einem der vorherigen Ansprüche.

## Claims

1. Solenoid valve having an actuator body (17), in which a magnet coil (15) is arranged which interacts with a magnet core (16), and which interacts with an armature (14) that can be moved relative to the magnet core (16) between two end positions and is acted upon by the spring force of an armature spring (13) in a movement direction pointing away from the magnet core (16), and wherein the magnet core (16) and the armature (14) have stopping surfaces (18a, 18b) which are interrupted by a recess (29) that receives the armature spring (13), wherein the magnet core (16) has a rounded configuration (31) which reduces a stress on the edges in the region of the stopping surfaces (18a, 18b),
**characterized in that** the rounded configuration (31) of the magnet core is a toroidal configuration (31) in the region of at least its stopping surface (18a).

2. Solenoid valve according to Claim 1,
**characterized in that** the stopping surfaces (18a, 18b) of the magnet core (16) and of the armature (14) have a convex/convex configuration combination.

3. Solenoid valve according to Claim 1,
**characterized in that** the stopping surfaces (18a, 18b) of the magnet core (16) and of the armature (14) have a convex/concave configuration combination.

4. Solenoid valve according to one of the preceding claims,
**characterized in that** the stopping surfaces (18a, 18b) are hardened.

5. High-pressure fuel pump with a solenoid valve according to one of the preceding claims.

## Revendications

1. Électrovanne, possédant un corps d'actionneur (17) dans lequel est disposée une bobine magnétique (15) qui coopère avec un noyau magnétique (16), et qui coopère avec un induit (14) pouvant être déplacé par rapport au noyau magnétique (16) entre deux positions finales, lequel est sollicité par la force de ressort d'un ressort d'induit (13) dans une direction de mouvement s'éloignant du noyau magnétique (16), et le noyau magnétique (16) et l'induit (14) possédant des surfaces de butée (18a, 18b) ajourées par un évidement (29) qui accueille le ressort d'induit (13), le noyau magnétique (16) possédant une configuration (31) arrondie qui réduit une charge aux bords dans la zone des surfaces de butée (18a, 18b), **caractérisée en ce que** la configuration (31) arrondie du noyau magnétique est une configuration (31) torique dans la zone au moins de sa surface de butée (18a).

2. Électrovanne selon la revendication 1,
**caractérisée en ce que** les surfaces de butée (18a, 18b) du noyau magnétique (16) et de l'induit (14) présentent une combinaison de configuration convexe/convexe.

3. Électrovanne selon la revendication 1,
**caractérisée en ce que** les surfaces de butée (18a, 18b) du noyau magnétique (16) et de l'induit (14) présentent une combinaison de configuration convexe/concave.

4. Électrovanne selon l'une des revendications précédentes, **caractérisée en ce que** les surfaces de butée (18a, 18b) sont trempées.

5. Pompe à carburant à haute pression comprenant une électrovanne selon l'une des revendications précédentes.
